# EUROPÄISCHE PATENTSCHRIFT

(11) **EP 0 992 428 B1**
(45) Veröffentlichungstag und Bekanntmachung des Hinweises auf die Patenterteilung: **27.08.2003**
(21) Anmeldenummer: 99118514.1
(22) Anmeldetag: 18.09.1999
(51) Int. Cl.: B64F 1/305

(54) **Ortsveränderliche Fluggastbrücke**
Movable aircraft boarding bridge
Passerelle déplaçable pour l'embarquement des avions

(30) Priorität: 06.10.1998 DE 19845892
(43) Veröffentlichungstag der Anmeldung: 12.04.2000
(73) Patentinhaber: Airbus Deutschland GmbH, 21129 Hamburg (DE)
(72) Erfinder: Kosuch, Norbert Dr.-Ing., 21224 Rosengarten (DE)
(74) Vertreter: Hansmann, Dierk, Dipl.-Ing.

(56) Entgegenhaltungen:
- WO-A-96/00166
- DE-A- 1 756 763
- DE-A- 4 210 762
- DE-A- 4 420 502
- US-A- 3 524 207

## Beschreibung

Die Erfindung bezieht sich auf eine ortsveränderliche Brücke gemäß dem Anspruch 1. Mit der Brücke, die sich einem ortsfest stationierten Flugzeug, typischerweise einem mehrdeckigen Großraumverkehrsflugzeuges, bzw. dessen Flugzeugrumpf (mit oder ohne Flügelbefestigung) positionieren läßt, wird der technologische Ablauf der Montage- bzw. Ausrüstungsarbeiten durch mit ihr weitestgehend ermöglichter freier Erreichbarkeit der Rumpfaußenbereiche und freier (ungehinderter) Zugänglichkeit zu den Rumpfinnenbereichen eines im Bau befindlichen Passagierflugzeuges günstig beeinflußt. Gleichfalls wird man mit ihr auf den Ein- oder Ausstieg von Personen oder das Be-oder Entladen von Gütern des parkenden Flugzeuges vorteilhaft Einfluß nehmen.

Es ist bekannt, daß der Zugang zu den Türen und / oder zu den anderen Außenbereichen der (endzumontierenden) Flugzeuge gegenwärtig über auf dem Boden stehende Vorrichtungen oder von bodenfest bis an das Flugzeug reichende Niveaus (Plattformen) oder von letzteren über zusätzliche Niveau- und / oder bodenabgestützte Zugangsvorrichtungen erfolgt. Für bestimmte Arbeiten (Lackier-, Justier-, Reparaturarbeiten) am Außenbereich der Flugzeuge, - bspw. für das Lackieren der Außenhaut von Flugzeugen -, werden in bekannten Montagehallen (Lackierhallen) deckenabgehängte Plattformen eingesetzt, die bis (nahe) an die verschiedenen Außenhaut-Bereiche steuerbar sind. Außerdem ist es bekannt, daß man zur Realisierung von vorgelagerten Montage- bzw. Ausrüstungsarbeiten am oder im Flugzeug üblicherweise auch bodenfest positionierte Vorrichtungen (mehrgeschoßige Plattformen) benutzt, in die der Flugzeugrumpf oder die einzelnen Rumpfabschnitte fest eingebracht sind.

Vorrichtungen, die den unbehinderten Zugang zu vielen Türen und anderen Bereichen der Flugzeuge - insbesondere bei großen Flugzeugen mit entsprechender großer Höhe über dem Boden oder mit entsprechend großer Entfernung von festen Niveaus - sowie das notwendige Heranführen und Entfernen dieser Vorrichtungen fiir das Ein- und Ausdocken der Flugzeuge bzw. Flugzeugrümpfe ermöglichen, erfordern bei der bekannten Art der Vorrichtungssysteme sehr hohe Herstellungskosten, erheblichen Zeitaufwand beim Ein- und Ausdocken, große Belastungsfähigkeit des Bodens wegen der hohen Gewichte und (wegen der Verfahrbarkeit bei einigen Vorrichtungen beim Ein- und Ausdocken) hohe Anforderungen an ein Transportsystem für die Vorrichtungen und / oder an die Ebenheit des Bodens.

Im Flugzeugbau werden deshalb vorteilhaftere Technologie-Konzepte umzusetzen sein, mit denen man - insbesondere beim Bau der nächsten Generation von Großraumverkehrsflugzeugen - die vorbeschriebenen Nachteile umgeht.

Ergänzend den vorbeschriebenen Angaben wird der Fachwelt mit der EP 626 339 A1 eine Lösung vorgestellt, die sich auf einen Hängekran mit einer absenkbaren Arbeitsplattform-Konstruktion bezieht. Es handelt sich dabei um einen Hängekran, der (ohne nähere Beschreibung von konstruktiven Details) mindestens einen (sogenannten) vertikal positionierten Führungsbaum, der an einer (an der Kranbrücke verfahrbaren) Laufkatze des Hängekranes lotrecht nach unten ragend (hängend) befestigt ist, für einen ihm vertikal (auf und ab) verfahrbaren Hubschacht aufweist. Der Hubschacht, der am Führungsbaum drehfest geführt ist, trägt eine oder mehrere Arbeitsplattformen. Letztere sollen am Hubschacht vertikal und horizontal verfahrbar und ggf. auch drehbar ausgeführt sein. Diese Lösung wird insbesondere für die Flugzeugwartung (insofern auch: für die voran erwähnten Lackier-, Justier, Reparaturarbeiten) interessant sein. Sie wird aber kaum dazu beitragen, den technologischen Ablauf der Montage- bzw. Ausrüstungsarbeiten eines im Bau befindlichen Passagierflugzeuges (mehrdeckigen Großraumverkehrsflugzeuges) aufgrund der vorangegebenen Nachteile günstig zu beeinflußen.

Außerdem wird mit der DE 44 20 502 A1 eine Lösung offenbart, die ähnliche Merkmale wie die EP 0 626 339 A1 zeigt, wie sie bereits vorher gewürdigt worden sind.

Auch ist nach der WO 96/00166 die Lösung eines Arbeitsdocks für ein Flugzeug bekannt, das mehrere Brückenstege aufweist, welche horizontal und parallel verlaufend zueinander beabstandet angeordnet sind, sich in Richtung der Rurnpflängsachse des Flugzeuges erstrecken, von denen zwei parallel verlaufende Brückenstege, die nebeneinander liegend am Flugzeugrumpf entlang geführt sind, ein Brückenstegpaar bilden.

Ferner ist aus der DE-OS 17 56 763 eine Anlage bekannt, mit einer Stützeinrichtung, die zumindest teilweise einen Teil des Flugzeuges umgreift. Brückenträger, deren Krümmung der Rumpfquerschnittsaußenform angepaßt sind, sind dieser Druckschrift nicht entnehmbar. Bei der Position 10 nach der Figur 2 dieser Druckschrift liegt hier lediglich eine Leiter - zum weiteren begehen einer Plattform - vor. Der Oberbegriff des Anspruchs 1 basiert auf diesem Dokument.

Demzufolge liegt der Erfindung die Aufgabe zugrunde, eine ortsveränderliche Brücke derart zu gestalten, daß - insbesondere bei (mehretagigen) großen Flugzeugen - mit ihrer Hilfe ein unbehinderter Zugang zu allen Türbereichen gewährleistet wird und sich zugleich bestimmte Arbeiten am Außenbereich des Rumpfes erledigen lassen. Außerdem soll mit ihr ein günstiges Heranführen und Entfernen für das Ein- und Ausdocken der Flugzeuge bzw. Flugzeugrümpfe gewährleistet werden. Zudem soll der Einsatz der Brücke den technologischen Ablauf der Montage- bzw. Ausrüstungsarbeiten (durch den unbehinderten Zugang der Tür- und der angrenzenden Rumpfaußenbereiche) eines endzumontierenden Flugzeuges und gleichfalls den Ein- oder Ausstieg von Personen oder das Be- oder Entladen von Gütern des parkenden Flugzeuges günstig beeinflußen, wobei ihre Herstellungskosten und ihr Gesamtgewicht - im Vergleich bekannter Vorrichtungen - niedrigerer ausfallen sollen.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung wird in einem Ausführungsbeispiel anhand der beiliegenden Zeichnungen näher beschrieben. Es zeigen:
- Fig. 1: eine auf dem Flugzeugrumpf 4 abgelegte einteilig ausgeführte Brücke 1;
- Fig. 2: den Querschnitt A - A an der Stelle des gelegten Schnittes nach der Fig. 1;
- Fig. 2a: den Querschnitt eines rumpfseitwärts links geführten Brückensteges 5 mit ihm befestigten Geländer 15 (Detaildarstellung);
- Fig. 2b: den Querschnitt eines rumpfseitwärts rechts geführten Brückensteges 5 mit ihm befestigten Geländer 15 (Detaildarstellung);
- Fig. 3: einen aus zwei miteinander gekoppelten Brückensegmenten 131, 132 integrierten Brücken-Bereich 11.

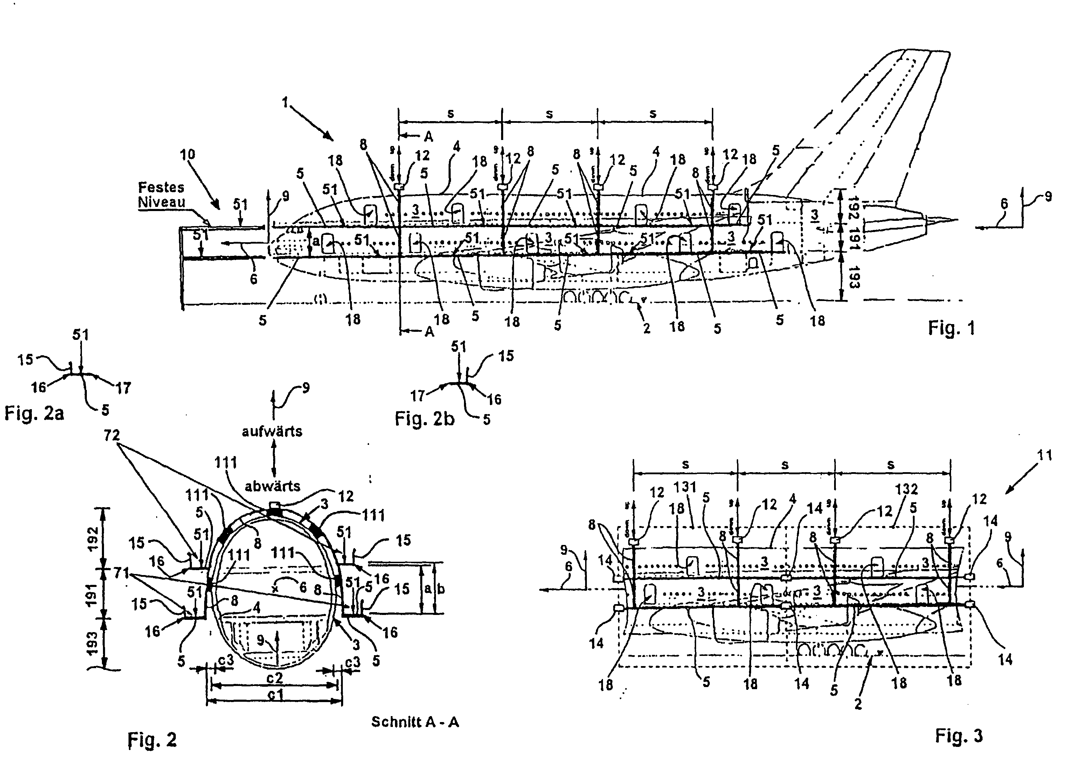

Aus der Fig. 1 erkennt man eine ortsveränderliche und einteilig ausgeführte Brücke 1, die auf dem Flugzeugrumpf 4 eines in der Endmontage befindlichen mehrdeckigen Großraumverkehrsflugzeuges, das wegen noch inner- und außerhalb des Flugzeugrumpfes 4 auszuführender Montagearbeiten ortsfest positioniert ist, abgelegt dargestellt ist. In der Fig. 2 wird die Schnittdarstellung A - A an der Stelle des gelegten Schnittes nach der Fig. 1 gezeigt, der diese Brücke 1 in einer auf dem Rumpfaußenbereich 3 des (im Querschnitt wiedergegebenen) Flugzeugrumpfes 4 abgelegten Position zeigt. Die Figuren 2a und 2b beziehen sich auf Detailausschnitte der Brücke 1 nach der Fig. 2, aus denen man ein am (rumpfseitwärts geführten) Brückensteg 5 befestigtes Geländer 15 entnehmen kann. Die Fig. 3 zeigt einen auf dem Flugzeugrumpf 4 abgelegten (ortsveränderlichen) Brücken-Bereich 11, der aus zwei Brückensegmenten 131, 132 integriert ist, mit an den Enden der beiden Brückenstege 5 (des betreffenden Brückensegmentes 131, 132) installierter Koppeleinheit 14, mittels der sich ein ihr benachbarter weiterer Brücken-Bereich, der aus mindestens einem Brückensegment 131, 132 integriert ist, mit dem nehmlichen Brücken-Bereich 11 koppeln oder entkoppeln läßt, weshalb sich dermaßen miteinander gekoppelte (mehrere) Brücken-Bereiche zu einer mehrteilig ausgeführten Brücke 1 komplettieren lassen.

Allgemein umfaßt die Brücke 1 (nach den Figuren 1 und 2) oder der einzelne Brücken-Bereich 11 (nach der Fig. 3) mehrere Brückenstege 5, die horizontal und parallel verlaufend zueinander beabstandet angeordnet sind. Die Brückenstege 5 erstrecken sich in Richtung der Rumpflängsachse 6 des Großraumverkehrsflugzeuges, von denen - nach der Fig. 2 - immer zwei parallel verlaufende Brückenstege 5, die nebeneinanderliegend am Flugzeugrumpf 4 entlang geführt sind, ein (sogenanntes) Brückenstegpaar 71, 72 bilden. Den Brückenstegen 5 der Brückenstegpaare 71, 72 sind mehrere gekrümmte Brückenträger 8, deren Krümmung weitestgehend dem (der) nach Fig. 2 - oval ausgeführten - Rumpfquerschnitt(saußenform) angepaßt ist und die quer zur Rumpflängsachse 6 und - auf die gekrümmte Trägerlänge bezogen - in Richtung der Rumpflängsachse 6 zueinander beabstandet angeordnet sind, befestigt. Dabei umgeben (umhüllen) die Brückenträger 8 - im abgelegten Zustand auf dem Flugzeugrumpf 4 den (bis an den Türschwellenbereich der untersten Flugzeugtüren 18 angrenzenden) Rumpfaußenbereich 3 - mit ihrem Trägerprofil, wobei sie jeweils an den betreffenden Brückenstegen (des betreffenden Brückenstegpaares 71, 72) - über die Brükkensteglänge verteilt - befestigt sind. Diese Brückenkonstruktion wird durch Polsterelemente 111, die unterhalb der Brückenträger 8 positioniert sind und die Rumpfauflagebereiche gegen letztere (im Stadium ihrer Rumpfauflage) abpolstern. Entsprechende Tragelemente 12, die man beispielsweise als Authängeöse ausführen kann, sind auf den Brückenträgern 8 (im Ursprungs- oder ursprungsnahen Bereich der annähernd parabelförmigen Krümmung) außerhalb (respektive oberhalb) der betreffenden Trägerauflage befestigt. Diese Tragelemente 12 dienen der Kopplung, beispielsweise der mechanischen Kopplung mit einem seilbefestigten und ortsveränderbaren Authängehaken einer (figurlich nicht gezeigten) (decken)variabel beweglichen autarken Zug- und Abhängevorrichtung, die an einer Montagehallen-Dachkonstruktion (unterhalb des Hallendaches) verfahrbar aufgehängt installiert ist.

Nach der Fig. 1 besteht die (als eine mögliche Ausführung aufzufassende) Brücke 1 aus vier Brükkenstegen 5 und vier Brückenträgern 8. Die Brückenstege 5 erstrecken sich in Richtung der Rumpflängsachse 6 entlang dem Flugzeugrumpf 4, wobei mehrere (in der Fig. 2 gezeigte) Polsterelemente 111 die nachfolgend beschriebene Brückenkonstruktion gegen die Rumpfaußenhaut abpolstern. Die Polsterelemente 111 sind zum Schutz der Rumpfaußenhaut vor ungewünschten Außenbeschädigungen vorgesehen, auf deren Anordnung später näher eingegangen wird.

In dieser Seitenansicht (nach der Fig. 1) werden zwei (von insgesamt vier) horizontal verlaufende(n) Brückenstege 5 gezeigt, die sich nahe dem (am) Flugzeugrumpf 4 erstrecken. Die verbleibenden (und in der Fig. 1) nicht sichtbaren zwei Brückenstege 5, welche sich gleichsam dem (am) rückseitig befindlichen Rumpfaußenbereich 3 in Richtung der Rumpflängsachse 6 erstrecken, sind mit dem gleichen Höhenniveau der beiden sichtbaren Brückenstege 5 längsverlaufend (dem Flugzeugrumpf 4) angeordnet. Demnach sind (im Vergleich der Fig. 2) immer zwei auf gleichen horizontalen Niveau befindliche Brückenstege zueinander im horizontalen Brückenstegabstand c1 bzw. c2 (parallel zueinander) angeordnet. Dabei entspricht der Brückenstegabstand c1 oder c2 dem horizontalen Abstand der Seitenbereiche der Rumpfaußenkontur und (exakt betrachtet) einem (diesem Abstand mit aufzusummierenden) Abstand der (in der Fig. 1 nicht gezeigten) erwähnten Polsterelementen 111. Diese Brückenstege 5, die auf gleichem horizontalen Niveau rumpfachsenlängsverlaufend angeordnet sind, bilden jeweils - wie aus der Fig. 2 ersichtlich - eines (von zwei) der (sogenannten) Brückenstegpaare 71, 72. Diese beispielhafte (und nach der Fig. 1 einteilig ausgeführte) Art von Brückenkonstruktion bezieht sich demnach auf zwei zueinander etagenartig (am Flugzeugrumpf 4) angeordnete Brückenstegpaare 71, 72, die in Richtung der Rumpfhochachse 9 zueinander einen gleichmäßigen vertikalen Abstand, den sogenannten Brückenstegabstand a, besitzen.
Den Brückenstegen 5 (der Brückenstegpaare 71, 72) sind mehrere vertikal angeordnete Brückenträger 8 befestigt, deren Krümmung weitestgehend der Rumpfquerschnittsaußenform (der Rumpfaußenkontor) angepaßt ist. Die Brückenträger 8, die quer zur Rumpflängsachse 6 und - auf ihre gekrümmte Trägerlänge bezogen - in Richtung der Rumpflängsachse 6 zueinander beabstandet angeordnet sind, sind mit ihrem Trägerprofil jeweils an einem der Brückenstege 5 - über die Brückensteglänge verteilt - befestigt. Sie sind danach [im abgelegten (ab)gepolsterten (End-)Zustand auf dem oberen Teil des Rumpfaußenbereiches 3] zueinander im horizontalen Abstand s angeordnet. Dieser Abstand s kann ein verschiedenes Längenmaß, das der Anordnung der Flugzeugtüren 18 im Flugzeugrumpf 4 angepaßt ist, besitzen. Es richtet sich weitestgehend danach, daß man eine vertikale Ablage der einzelnen Brückenträger 8 auf den neben der betreffenden Flugzeugtür 18 angrenzenden freien Rumpfaußenbereichen 3 gewährleistet, um den ungehinderten Zugang der Türbereiche über die (in der Fig. 2 näher erläuterte) Lauffläche 51 abzusichern. Im Beispiel nach der Fig. 1 wird ein konstanter Abstand s angenommen.

Den gekrümmten Brückenträgern 8 ist am äußeren Umfang (nach der Fig. 1) mittig ihrer gestreckten Länge (also am Wendepunkt der parabelähnlichen Krümmung) außerdem wenigstens ein Tragelement 12 befestigt, das zur Kopplung mit einer (in den beiliegenden Zeichnungen nicht gezeigten) autark arbeitenden und ortsveränderlichen Zug- und Abhängevorrichtung geeignet ist, die beispielsweise der Deckenkonstruktion einer Montagehalle verfahrbar ist.

Auf die Brückenkonstruktion nach der Fig. 1 eingehender bezogen - sind demnach zwei der(artige) Brückenstegpaare 71, 72 dem Brückenbau integriert, deren - links oder rechtsseitig am Flugzeugrumpf 4 sich längs ersteckende - außenliegende Brückenstege 5 in Richtung der Rumpfhochachse 9 zueinander den vorerwähnten gleichmäßigen vertikalen Brückenstegabstand a besitzen. Dieser (auch im Vergleich der Fig. 2) als vertikaler Brückenstegabstand a bezeichnete Abstand zwischen den (seitlich dem Flugzeugrumpf 4 befindlichen) und zueinander vertikal beabstandeten Brückenstegen 5 eines ersten (unteren bzw. unterhalb angeordneten) Brückenstegpaares 71 und eines (ihm oberhalb etagenartig angeordneten) zweiten (oberen bzw. oberhalb angeordneten) Brückenstegpaares 72 korreliert mit dem Türschwellenabstand b der rumpfverteilten Flugzeugtüren 18 des mehrdeckigen Flugzeuges, wonach die - von einer ortsfest begehbaren Plattform 10 betretbare - frei begehbar zugängliche Lauffläche 51 der dielenartig ausgeführten Brückenstege 5 sich (in praxi: etwa) auf gleichem horizontalen Niveau befinden. Danach werden, - die Rumpfablage der Brücke 1 vorausgesetzt -, die begehbare(n) Lauffläche(n) 51 und die Trittschwelle(n) der einzelnen Flugzeugtür(en) 18 sich auf gleichem Höhenniveau befinden.

Die Brücke 1 besitzt demnach (für einen Betrachter) zwei (personen)begehbare Etagenbereiche 191, 192, die sich seitwärts der links- und rechtsseitigen Rumpfaußenbereiche 3 (an der Rumpfaußenkontur) befinden. Der untere Etagenbereich 191 wird (in Richtung der Rumpfhochachse 9 auf den betreffenden Rumpfaußenbereich 3 bezogen) durch den im Brückenstegabstand a angeordneten Brückensteg 5 des betreffenden Brückenstegpaares 71, 72 begrenzt, wogegen der obere Etagenbereich 192 sich vom betreffenden Brückensteg 5 des zweiten Brückenstegpaares 72 bis in die Nähe des Koppelbereiches der Tragelemente 12 aufspannt.

Mit der Fig. 2 wird (dem Betrachter) bezüglich der vorab bereits gegebenen (und auf die Fig. 1 bezogenen) Erläuterungen ein besserer Einblick vermittelt, die nachfolgend ergänzt werden.

Es wird der Querschnitt der Brücke 1 gezeigt, die auf dem Flugzeugrumpf 4 - genauer auf dem betreffenden Abschnitt des Rumpfaußenbereiches 3 - (nach der Fig. 1) an der Stelle des gelegten Schnittes A - A abgelegt ist. Anschaulich läßt sich aus der Schnittdarstellung A - A die parabelförmige Krümmung eines einzelnen Brückenträgers 8 und die Befestigung der vier Brückenstege 5 an dem nehmlichen Brückenträger 8 sowie die Abpolsterung des Brückenträgers 8 mit mehreren (verteilten) Polsterelementen 111 an seinem dem Rumpfaußenbereich 3 zugewandten inneren Umfang erkennen. Auch die Zuordnung der Brückenstegpaare 71 wird besser sichtbar. Diese Schnittdarstellung A - A bezieht sich gleichermaßen auf alle im (nach den Figuren 1 und 3 - konstant gewählten) horizontalen Abstand s angeordneten und der Brückenkonstruktion integrierten Brückenträger 8, die sich - allgemein betrachtet - natürlich auf eine beliebige Anzahl von Brückenträgern 8 [in Abhängigkeit der erforderlichen Abmaße (der Größe) und der nötigen Dimensionierung der Brückenelemente des Brückenbaus und anderer (beeinflußbarer) statischer Faktoren, auf die nicht näher eingegangen wird,] erweitern oder auf eine gewisse Anzahl (von mindestens einem) Brückenträger 8 beschränken.

Die Beschränkung auf nur einen einzelnen Brückenträger 8 würde sich dann auf einen (figurlich nicht gezeigten) Arbeitbrücken-Bereich beziehen, deren Brückensteg 5 einerseits endseitig dem eingangs erwähnten (und autark der Brücke 1 positionierten) begehbaren Plattformniveau mit frei begehbarer Lauffläche 51 (genauer: einer ortsfest- oder ortsveränderlichen Plattform 10 mit festem Niveau) befestigt wäre, wobei der betreffende Brückenträger 5 dem Flugzeugrumpf 4 abgepolstert aufliegt.
Dem anderen Ende dieses Brückensteges 5 wäre (vorgreifend auf das und gleichermaßen nach dem Vorbild nach der Fig. 3) eine Koppeleinheit 14 mit einem männlichen oder weiblichen Koppelelement installiert, die mit einem Betätigungsmechanismus zur Bedienung des Koppelelementes ausgerüstet ist.

Es wäre denkbar, daß außerdem - auch mit einem Vorgriff auf das erwähnte Vorbild der Fig. 3 - eine Brücke 1 mit wenigstens zwei Brückenträgern 8, die auf dem Flugzeugrumpf 4 abgelegt werden, ausgerüstet ist. Dann würde man die Brückenstege 5 jeweils zu beiden Enden mit einer Koppeleinheit 14 der vorgenannten Art versehen, so daß sich auf diese Art und Weise mehrere auf dem Flugzeugrumpf 4 abgelegte Brücken-Bereiche 11 zu einer mehrteilig ausgeführten Brücke 1, deren Brückenkonstruktion auf dem ähnlichen Vorbild der Figuren 1 und 2 basiert, komplettieren lassen, mit dem Unterschied, daß den stirnseitigen (zueinander befindlichen) Enden der Brückenstege 5 jeweils eine Koppeleinheit 14 installiert ist, über deren Betätigungsmechanismus das betreffende männliche und / oder weibliche Koppelelement vereint wird.

Mit der Vereinigung der entsprechenden Koppelelemente läßt sich ein gesicherter befestigter Zustand von horizontal am Flugzeugrumpf 4 entlanggeführten und aneinandergereihten Brückenstegen 5 dermaßen umsetzen.

Zurückkommend auf die Querschnittsdarstellung der Brücke 1 nach der Fig. 2 wird ergänzt, daß beispielsweise eine Befestigung aller Brückenträger 8 an den betreffenden Brückenstegen 5 des zweiten Brückenstegpaares 72 im Kreuzstoß und des ersten Brückenstegpaares 71 im T-Stoß als vorteilhaft angesehen wird, die mechanisch erfolgt. Dabei läßt sich diese Befestigung der Brückenträger 8 an den Brückenstegen 5 weitestgehend durch Verschraubung und / oder Vernietung und / oder Verschweißung der Verbindungselemente (Brückenträger 8 an Brückensteg 5) umsetzen.

Der Brückenbau wird mit Brückenstegen 5, die als ungehindert begehbare Lauf- und Transportstege ausgebildet sind, realisiert. Nach den Figuren 2a und 2b sind diese Brückenstege 5 mit einem Geländer 15 versehen, das an einer Längskante 16 des betreffenden Brückensteges 5, die sich dem Flugzeugrumpf 4 nicht zuwendet, befestigt ist. Das Geländer 15, das bei beiden Ausführungen lotrecht an dieser freien (dem Flugzeugrumpf 4 abgewandten) Längskante 16 befestigt ist, wird dem Montagepersonal, das über die Lauffläche 51 des Brückensteges 5 die Flugzeugtüren 18 erreichen soll, entsprechenden Schutz gegen unbeabsichtigtes Herunterfallen von der (beispielsweise abschnittsweise gitterartig und) trittfest ausgeführten Lauffläche 51 beim Benutzen der Brücke 1 gewähren.

Wie vorher (bezüglich der Fig. 2) angedeutet - sind die dem Brückenbau integrierten Brückenstege 5 derart positioniert sind, daß die sich dem Flugzeugrumpf 4 zuwendende Längskante 17 des einzelnen Brückensteges 5 mit dem Höhenniveau der einzelnen Türschwelle von mehreren in Richtung der Rumpflängsachse 6 und in horizontaler Ebene befindlichen Flugzeugtüren 18 abschließt. Danach wird - infolge der nahezu vertikalen Lage (Stellung) der einzelnen Brückenträger (der Brückenkonstruktion) im unteren (dem bodennahen Bereich 193 angrenzenden) Türbereich - zwischen der Türschwelle im Eintrittsbereich der betreffenden Flugzeugtür 18 und der rumpfzugewandten (rumpfnahen) Längskante 17 des betreffenden Brückensteges 5 des Brückenstegpaares 71 ein gewisser horizontaler Brückenstegabstand c3 vorhanden sein. Dieser Abstand c3 wird mit einer (sogenannten und figurlich nicht gezeigten) vertikal verschwenkbaren Ausgleichsklappe, die an der Längskante 17 oder auf dem (ihr naheliegenden angrenzenden) Randbereich der Lauffläche 51 befestigt ist, überbrückt, worauf später (bezüglich der Figur 3) noch näher eingegangen wird. Anderenfalls schließt die Oberkante des betreffenden Brückensteges 5 des Brückenstegpaares 72 definitiv mit der Oberkante der Türschwelle im Eintrittsbereich der betreffenden Flugzeugtür 18 nahezu bündig ab, so daß auf eine derartige Ausgleichklappe verzichtet werden kann. Dementsprechend wäre ein sogenannter Trittschwellenabstand b, der sich auf den vertikalen Abstand zwischen den Laufflächen 51 des betreffenden Brückensteges 5 des ersten und des zweiten Brückenstegpaares 71, 72 bezieht, einzuhalten, um gleichsam die Höhenniveaus auf beiden Etagenbereichen 191, 192 abzusichern. Im übrigen kann man aus der Fig. 2 deutlich erkennen, daß den gekrümmten Brückenträgern 8 mehrere am inneren Umfang verteilt angeordnete Polsterelemente 111 unterlegt sind. Die Anzahl der unterlegten Polsterelemente 111 korreliert mit dem Eigengewicht der Brücke 1 (nach der Fig. 1) oder dem Eigengewicht des betreffenden (vorgenannten) Brücken-Bereiches 11 und dem (maximal angenommenen) Personengewicht, die den (einteiligen oder zusammengesetzten) Brückenbau gegen den Rumpf(querschnitts)außenbereich 3 abstützen.

Es wird (an dieser Stelle mit) erwähnt, daß ein Austausch der Polsterelemente 111 gegen (figurlich nicht gezeigte) Abstandhalter denkbar wäre. Diese Möglichkeit könnte man singulär für eine Situation vorsehen, wenn man die Brücke 1 (nach Fig. 1) oder den betreffenden Brücken-Bereich (11 bspw.) nach Fig. 3 mit der am Tragelement 12 gekoppelten Zug- und oder Abhängevorrichtung bis nahe auf dem Flugzeugrumpf 4 absenken würde. Dann würden die anstelle der Polsterelemente 111 installierten Abstandhalter gegen den Rumpfaußenbereich 3 abstützen.

Eine zusätzliche (figurlich nicht gezeigte) Justiereinrichtung würde die (vorläufige) Lage der Brückenkonstruktion am Flugzeugrumpt 4 solange verändern, bis daß die Brücke 1 bzw. die Brückensegmente 131, 132 (nach der Fig. 3) vermittels der Abstandhalter positionsgewünscht am (dem) Flugzeugrumpf 4 fixiert sind.

Außerdem bestände ferner die Möglichkeit, daß mehrere Tragelemente 12 (Tragösen) am äußeren Umfang eines jeden gekrümmten Brückenträgers 8 beabstandet verteilt befestigt sind. Diese Tragelemente 12 wären dann dem mittleren Bereich der gestreckten Länge des Brückenträgers 8 positioniert und an diesem, beispielsweise durch Verschraubung mit dem Brückenträger 8, befestigt.

In der Fig. 3 wird ein einzelner Brücken-Bereich 11 der vorher angedeuteten Art gezeigt. Die Darstellung bezieht sich hier auf zwei an den freien Enden der Brückenstege 5 miteinander gekoppelten Brückensegmente 131, 132, die (im - über Koppeleinheiten 14 - dermaßen befestigten Zustand) zu dem erwähnten Brücken-Bereich 11 integriert sind. Der Aufbau des einzelnen Brükkensegmentes 131, 132 ist weitestgehend ähnlich dem vorbeschriebenen Aufbau für eine Brücke 1 nach der Fig. 1. Dabei würde das einzelne Brückensegment 131, 132 einem der Brücke 1 ausgenommenen Gebilde entsprechen, das man (angenommenermaßen) durch eine zweifache längenseitige Unterbrechung der - aus der Fig. 1 bekannten - (beiden) horizontal liegenden Brückenstege 5 erhalten würde. Der einzelne Brückensteg 5 des (angenommenen) Gebildes würde eine Brückensteglänge besitzen, die mit dem horizontalen Abstand s und einem diesem Abstand s hinzu addierten weiteren Längenmaß, dessen Länge kleiner dem horizontalen Abstand s ist, korreliert; das etwa einer gestreckten Länge: { von s bis weniger 2s} entsprechen würde. Die Befestigung der beiden vertikal gekrümmten Brückenträger 8 würde - gemäß dem Vorbild der Fig. 1 - im horizontalen Abstand s an den Brückenstegen 5 erhalten bleiben, wobei sich links und rechtsseitig des Befestigungsbereiches der beiden Elemente jeweils der verbleibende Abschnitt des betreffenden Brückensteges 5 mit einer gestreckten Länge: {von weniger 1/2 s} anschließt, an dessen freiem Ende eine Kopplungseinheit 14 installiert ist.
Zwei dermaßen über Koppeleinheiten 14 befestigte Brückensegmente 131, 132 lassen sich günstigerweise zu dem nehmlichen Brücken-Bereich 11 kombinieren, falls man (aus bestimmten Gründen) nur eine ungehinderte Zugänglichkeit der Flugzeugtüren 18 in Endbereichen (nahe dem Cockpit- bzw. dem Leitwerksbereich) auf dem Flugzeugrumpf 4 gewähren will.

Anderenfalls lassen sich mit der deckenverfahrbaren Zug- und Abhängevorrichtung einzelne Brückensegmente 131 oder 132 besser transportieren und auf vordefinierten Teilabschnitten des Rumpfaußenbereiches 3 ablegen, die sich danach durch die vorgenannte endseitige Kopplung der (einander horizontal gegenüberstehenden) Brückenstege 5 zu einer begehbaren Brücke 1 (gemäß dem Vorbild nach Fig. 1) kombinieren lassen.

Im abgelegten Endstadium der Brücke 1 oder eines einzelnen Brückenbereiches 11 oder eines einzelnen Brückensegmentes 131 oder 132 auf dem Rumpfaußenbereich 3 wird über die Etagenbereiche 191, 192 der Zugang des Montagepersonals an die Passagiertüren 18 und an die Außenhautbereiche seitwärts dem Flugzeugrumpf 4 ermöglicht. Es bleibt zu ergänzen, daß das unterhalb dem ersten Etagebereich 192 (unterhalb der Lauffläche 51 des Brückensteges 5) bis zum Boden 2 reichende rumpfnahe Gebiet als bodennaher Bereich 193 bezeichnet wird.

Zu alledem wird folgendes ergänzt, daß die Brückenstegpaare 71, 72 der ein- oder mehrteilig ausgeführten Brücke 1 nach dem Vorbild der Figuren 1 und 3 als übereinanderliegende Lauf/Transportstege mit einem zusätzlichen Seitenschutz zum Flugzeugrumpf 4 versehen sind, wobei die Türeingänge der Flugzeugtüren 18 freibleibend (d. h. ohne Vorsehung eines Seitenschutzes im betreffenden Türbereich) ausgeführt sind. Damit wird (die Ablage der Brückenkonstruktion auf dem Flugzeugrumpf 4 vorausgesetzt) ein ungehinderter Zugang zu allen Passagiertüren 18 auf beiden Rumpfseiten des mehrdeckigen Verkehrsflugzeuges - während der Flugzeug-Endmontage gewährleistet. Dabei werden die Brückenträger 8 (der Brücke 1 oder Brückensegmente 131, 132) zur (unbelasteten) Ablage auf den Rumpfspanten [quer zur Rumpflängsrichtung und die vordefinierte Form resp. Krümmung (ein)haltend] ausgelegt, ausgelegt.

Unter der Annahme, daß kein deckenverfahrbarer Hallenkran als Zug- und / oder Abhängevorrichtung zur Verfügung stehen würde, werden anderenfalls zum Absetzen oder Anheben der Brücke 1 oder des (aus mindestens zwei gekoppelten Brückensegmenten 131, 132 bestehenden) Brücken-Bereiches 11 oder des einzelnen Brückensegmentes 131, 132 deren Koppeleinheiten durch ein (oder mehrere) ihnen befestigte Stahlseile angehoben. Dabei wird (werden) das (die) Stahlseil(e) von den Aufnahmepunkten des Tragelementes 12 [genauer: von einer (mehreren) seilunterhakten Öse(n)] zu einer (oder mehreren) Rolle(n) geführt, wobei die einzelne Rolle am Außenumfang rillenartig vertieft ist und daß Seil in der Rille geführt wird. Die Rolle(en) sind in der verstärkten Dachhallenverstrebung drehbeweglich befestigt.

Das (die) Seilende(n) ist (sind) gemeinsam einer unter dem Hallendach (unter der Hallendecke) installierten autarken Zugvorrichtung befestigt, mit der das (die) Seil(e) über die Rolle(n) gezogen oder zurück bewegt werden können.

Durch eine Horizontal-Bewegung (in Richtung der Rumpflängsachse 6) und unter Einhaltung eines definierten Vertikal-Abstandes (in Richtung der Rumpfhochachse 9) zum (nachfolgend unterführten) Flugzeugrumpf 4 wird man die Brücke 1 bzw. (allgemein) die betreffende Brückenkonstruktion (genauer: die betreffenden Brücken-Bereiche 11 oder das einzelne Brückensegment 131, 132) bis in die Nähe (in Richtung) des Leitwerkes auf eine vorgesehene Horizontal-Position bringen, danach den Flugzeugrumpf 4 durch eine Vorwärtsbewegung auf eine Dockposition (unterhalb der geöffneten Parabel der Brückenkonstruktion) führen, und abschließend die Brückenkonstruktion auf dem Flugzeugrumpf 4 absenken.

Der Vorgang: "Eindocken" der betreffenden Brückenkonstruktion wird (allgemein) durch das An(koppeln) der (mehrfach erwähnten) Zug- und Abhängevorrichtung oder durch die vorgenannte Seilbefestigung am (der Brückenkonstruktion befestigten) Tragelement 12 eingeleitet. Infolge der Deckenverfahrbarkeit der Zug- und Abhängevorrichtung bzw. der geschilderten Vorwärtsbewegung durch die rollengeführte Seilzugbewegung wird die Brückenkonstruktion in eine Position gebracht, von der aus das Absenken der Brückenkonstruktion in eine exakte Andockposition erfolgen wird. Letztere Maßnahme wird dermaßen realisiert, wonach sich die endseitig den Brückenstegen 5 installierten Koppeleinheiten, die sich dem vorher erwähnten festen Gebäudeniveau (Plattformniveau) festzuwenden, mit den (auch) an dieser Plattform installierten Koppeleinheiten problemlos koppeln lassen. Damit wird eine Situation geschaffen, wonach - wie vorbeschrieben - die Laufflächen 51 (soll heißen: die betretbaren Flächen) der Brückenstege 5 parallel den Türschwellen der Flugzeugtüren 18 angeordnet sind.

Außerdem wird an den Fehlstellen (des vorerwähnten) Seitenschutzes im betreffenden Türbereich zwischen den Brückenstegen 5 des ersten Brückenstegpaares 71 und dem Türschwellenbereich (Eintrittsbereich) der Flugzeugtüren 18 eine trittfeste (aber aufhebbare) klappenartige Verbindung geschaffen, weil dort zwischen dem betreffenden Brückensteg 5 (des Brückenstegpaares 71) und dem Flugzeugrumpf 4 (wegen der gegenüber der Maximalrumpfbreite dort geringeren Rumpfbreite) definitiv ein gewisser horizontaler Brückenstegabstand c3 vorhanden ist.

Diese klappenartige Verbindung wird - wie vorher erwähnt - in der Gestalt der (figurlich nicht gezeigten) trittfesten Ausgleichsklappe, bei der es sich um eine (etwa) horizontal und flach aufliegenden Übertrittsfläche handelt, die nahe dem Rand der begehbaren Lauffläche 51 oder an der (ihr nahegelegenen) Längskante 17 des betreffenden Brückensteges 5 vertikal schwenkbar befestigt ist, realisiert. Dabei wird - die Rumpfauflage der Brückenkonstruktion vorausgesetzt - der freie Endbereich dieser Ausgleichsklappe [infolge der Vertikalbewegung der am Brückensteg 5 einseitig und drehbeweglich (bspw. mittels Scharnier) befestigten Ausgleichsklappe] dem nehmlichen Türschwellenbereich der betreffenden Flugzeugtür 18 aufgelegt.
Gleichermaßen wäre aber auch denkbar, daß die Befestigung der Ausgleichsklappe an der Längskante 17 des Brückensteges 5 durch eine anderweitig gelöste mechanische Verriegelung erfolgen kann, auf die nicht näher eingegangen wird. Diese Trittbefestigung (mit der Ausgleichsklappe) wird allgemein überall dort eingesetzt werden, falls definitiv ein gewisser horizontaler Brückenstegabstand (kleiner c3) zwischen dem betreffenden Brückensteg 5 des betreffenden Brückenstegpaares und dem Türschwellenbereich (Eintrittsbereich) der betreffenden Flugzeugtür(en) 18 besteht. Letztere Maßnahme wird sich gegebenenfalls auf eine Brückenkonstruktion beziehen, deren Einsatz bei einem mehrdeckigen (mehretagigen) Großraumflugzeug [mit mehr als zwei Passagierdecks] vorgesehen ist.

Ebenso werden die nehmlichen Stegenden der Brückenstege 5 über die ihnen installierte Koppeleinheit mit den am Plattformniveau (am festen Gebäudeniveau) installierten Koppeleinheiten gekoppelt (fest und unverrückbar verbunden).

Das Ausdocken der Brückenkonstruktion wird durch das (Ab)koppeln resp. durch die Zurücknahme der vorgeschilderten Verbindung(en) eingeleitet, dem sich ein Anheben der Brückenkonstruktion über ihre gestreckte Länge (Brückenweite) anschließen wird. Danach wird man den Flugzeugrumpf 4 durch eine Rückwärtsbewegung austakten.

Das Anpassen der betreffenden Brückenkonstruktion (Brücke, Brücken-Bereiche 11 oder Brückensegmente 131, 132) an eine Flugzeugversion (mit verlängerter oder verkürzter Rumpflänge) wird folgendermaßen geschehen. Zunächst wird die Brückenkonstruktion auf einem freine Dockplatz (in der Montagehalle) abgelegt und ihr die Zug- und Abhängevorrichtung oder die vorher angegebene Seilverbindung an den Tragelementen 12 entkoppelt.

Danach werden ihr weitere Brückensegmente 131, 132 (durch Einbau von Zwischensegmenten) oder Brücken-Bereiche 11 nach dem Vorbild der Fig. 3 (nach der vorbeschriebenen Technologie) integriert. Danach werden die Tragelemente 12 dieser dermaßen erweiterten Brückenkonstruktion mit der nehmlichen Zug- und Abhängevorrichtung oder dem(n) vorher angegebenen Seil(en), das (die) der Zugvorrichtung angeschlossen (befestigt) sind, (an)gekoppelt. Darauf erfolgt - unmittelbar kurz vor dem Eindocken des Flugzeuges (bzw. des Flugzeugrumpfes 4) - ein Anheben dieser Brückenkonstruktion auf Eindockposition, dem nachfolgend sich die vorgeschilderten technologischen Maßnahmen bis zum Abschluß des Eindock-Vorganges anschließen.

Mit der vorgeschilderten Brücke 1 und deren Modifikationen (Brücken-Bereiche 11 (einzeln eingesetzt oder mit weiteren Arbeitbrücken-Bereichen gekoppelt) und Brückensegmente 131, 132 (einzeln eingesetzt oder zu einem Brücken-Bereich 11 kombiniert) läßt sich technologisch ein einfaches Ein- und Ausdocken umsetzen. Danach wird
a) man schon bei einem geringfügigen Anheben der eingesetzten Brückenkonstruktion entsprechend vorwärts ein- oder rückwärts ausdocken können;
b) die eingesetzte Brückenkonstruktion eine relativ geringe seitliche Korrektur erfordern (soll heißen: nur mit geringem Aufwand wird eine Anpassung ihrer vorgesehenen Ablage- oder Abstützposition auf Flugzeugrumpf 4 umgesetzt);
c) bei Flugzeugen ohne angebautem Leitwerk und Flugzeugrümpfen 4 / Rumpfabschnitten in leicht angehobener Position der Brückenkonstruktion rückwärts ein- und vorwärts ausgedockt werden können;
d) gegenüber einer (nach dem Stand der Technik bekannten) festen und insbesondere beidseitig vom Flugzeugrumpf 4 benötigten Zugangsvorrichtung beim Ein- und Ausdocken eines Flugzeuges oder eines bodentransportierten Rumpf- oder Rumpfabschnittes mit der festen und engen Brückenkonstruktion ein präzises richtungsgebundenes Einfahren (Einparken) in diese entfallen.

Der Einsatz der Brücke 1 incl. ihrer Modifikationen erfordert keinen hohen Unterbau oder zusätzliche Treppen (zum Erreichen der Lauffläche(n) 51] oder Verfahreinrichtung(en). Daher kann sie extrem leicht und flach ausgelegt werden.

Geringes Gewicht und geringe Höhe der Brücke 1 incl. ihrer Modifikationen ermöglichen den Einsatz mit Hilfe einer einfachen deckenverfahrbaren Trage-/Hebekonstruktion von der dach- bzw. einer (angepaßten) Spezialtragekonstruktion aus, falls kein herkömmlicher Hallenkran zur Verfügung steht. Diese Eigenschaften erlauben erst deren Ablegen auf dem Flugzeugrumpf 4.

Mit der Brücke 1 incl. ihrer Modifikationen werden Niveaudifferenzen, die zwischen herkömmlichen Zugangsvorrichtungen und der Lage des auf dem Fahrwerk stehenden Flugzeuges bei unterschiedlichen Belastungszuständen auftreten werden, vermieden. Die vorgestellte(n) Brückenkonstruktion(en) ermöglichen ein leichtes bzw. - bei deren Ablage auf dem Flugzeugrumpf 4 - ein zwangsläufig exaktes Justieren der vorbeschriebenen Zusatzvorrichtung zum Rumpf.

Falls die eingesetzte Brückenkonstruktion nicht im Einsatz ist und seitlich dem Rumpf abgelegt wird, benötigt sie - verglichen mit herkömmlichen Vorrichtungen - wenig Platz. Sie kann - auch aufgrund ihrer Leichtbauweise - günstigenfalls unter dem Flugzeugrumpf 4 abgestellt bzw. unter dem Hallendach verbleiben.

Die Brücke 1 incl. ihrer Modifikationen kann man leicht an unterschiedliche Flugzeugversionen - schon aufgrund ihrer relativ einfachen unkomplizierten Herstellung (besonders bei segmentiertem Aufbau nach dem Vorbild der Fig. 3) - anpassen. Die technologischen Herstellungskosten einer dermaßen realisierten Lösung werden - besonders bei Flugzeugen / Flugzeugrümpfen mit großer Länge und großem Querschnitt (im Vergleich mit den derzeitig bekannten Konzepten gleicher Leistung) - sehr niedrig ausfallen. Der zeitliche Aufwand für das Ein- und Ausdocken wird gegenüber den im Einleitungsteil genannten Lösungen erheblich verbessert werden. Wegen der nicht zu erwartenenden Verschlechterung der Belastbarkeit des Bodens 2 werden - wegen des zu erwartenden niedrigen Gewichtes und wegen der günstigen Verfahrbarkeit der Brückenkonstruktion - beim Ein- und Ausdocken keine wesentlich hohen (überstrapazierten) Anforderungen an das Transportsystem (die Zug- und Abhängevorrichtung bzw. rollengeführte Seilzugverbindung incl. Zugvorrichtung) und / oder an die Ebenheit des Boden 2 zu richten sein.

## Patentansprüche

1. Ortsveränderliche Brücke (1) für den unbehinderten äußeren Zugang der Tür- und der angrenzenden Rumpfaußenbereiche (2, 3) eines stationierten Flugzeuges, die für Außenoder Innenarbeiten am oder im Flugzeugrumpf (4) und für den Ein- oder Ausstieg von Personen oder das Be- oder Entladen von Gütern in oder aus den Flugzeugrumpf bestimmt ist, wobei mehrere Brückenstege (5), die horizontal und parallel zueinander verlaufend an beiden Seiten des Flugzeugrumpfes (4) angeordnet sind, sich in Richtung der Rumpflängsachse (6) erstrecken, von denen immer zwei parallel verlaufende Brückenstege (5) ein Brückenstegpaar (71, 72) bilden, **dadurch gekennzeichnet, daß** mehrere gekrümmte Brückenträger (8), die quer zur Rumpflängsachse (6) und in Richtung der Rumpflängsachse (6) zueinander beabstandet angeordnet sind, deren Krümmung der Rumpfquerschnittsaußenform angepaßt ist, mit ihrem Trägerprofil jeweils an den Brückenstegen (5) eines Brückensteegpaares (71,72) - über die Brückenlänge verteilt - befestigt sind, dem Brückenbau integriert sind.

2. Ortsveränderliche Brücke nach Anspruch 1,
**dadurch gekennzeichnet, daß** die Krümmung der Brückenträger (8) in Abhängigkeit ihrer beabsichtigten Ablage oder Abstützung auf oder an den betreffenden Rumpfaußenbereichen (3), die wenigstens auf einem der oberen Rumpfquerschnitts-Außenbereiche des Flugzeugrumpfes (4) erfolgt, mit der Veränderung der Rumpfaußenwölbung in Richtung der Rumpflängs- und der Rumpthochachse (6, 9) und dem Abstand (s) der Brückenträger (8) zueinander korreliert und der näherungsweise kreisförmigen oder ovalen Rumpfquerschnittsaußenform des Flugzeugrumpfes (4) angepaßt ist.

3. Ortsveränderliche Brücke nach Anspruch 1,
**dadurch gekennzeichnet, daß** wenigstens zwei Brückenstegpaare (71, 72) dem Brückenbau integriert sind, die aus links- und rechtsseitig des Flugzeugrumpfes (4) und vertikal in Richtung der Rumpfhochachse (9) zueinander gleichmäßig beabstandeten und entlang am Flugzeugrumpf (4) horizontal geführten Brückenstegen (5) gebildet sind.

4. Ortsveränderliche Brücke nach Anspruch 3,
**dadurch gekennzeichnet, daß** die beiden Brückenstege (5) des unteren Brückenstegpaares (71) im Bereich der Flügelaufhängung am Flugzeugrumpf (4) unterbrochen sind oder in diesem Bereich der Flügelquerschnittsform angepaßt sind.

5. Ortsveränderliche Brücke nach Anspruch 1,
**dadurch gekennzeichnet, daß** das Trägerprofil der Brückenträger (8) abschnittsweise und / oder trägerendseitig an den betreffenden Brückenstegen (5) mechanisch befestigt ist, wobei die Befestigung der Brückenträger (8) an den Brückenstegen (5) auf deren definierte Anordnung am Flugzeugrumpf (4) abgestimmt ist.

6. Ortsveränderliche Brücke nach Anspruch 1,
**dadurch gekennzeichnet, daß** die Endabschnitte der Brückenstege (5) des betreffenden Brückenstegpaares (71, 72) mit wenigstens zwei Brückenträgern (8) mechanisch fest verbunden sind.

7. Ortsveränderliche Brücke nach Anspruch 1,
**dadurch gekennzeichnet, daß** wenigstens ein Ende der Brückenstege (5) an einer bodenfest positionierten und räumlich autarken Tragkonstruktion ortsfest befestigt ist.

8. Ortsveränderliche Brücke nach Anspruch 1,
**dadurch gekennzeichnet, daß** den gekrümmten Brückenträgern (8) mehrere am inneren Umfang verteilt angeordnete Polsterelemente (111) unterlegt sind, die infolge des Eigengewichtes des Brückenbaus diese gegen den Rumpfquerschnitts-Außenbereich abstützen.

9. Ortsveränderliche Brücke nach Anspruch 1,
**dadurch gekennzeichnet, daß** den gekrümmten Brückenträgern (8) am äußeren Umfang wenigstens ein Tragelement (12) befestigt ist, das zur Kopplung mit einer deckenfest positionierten und ortsveränderlichen autarken Zug- und Abhängevorrichtung geeignet ist und mittig der gestreckten Länge eines Brückenträgers (8) positioniert ist.

10. Ortsveränderliche Brücke nach Anspruch 9,
**dadurch gekennzeichnet, daß** mehrere Tragelemente (12) am äußeren Umfang eines jeden gekrümmten Brückenträgers (8) beabstandet verteilt befestigt sind, die dem mittleren Bereich der gestreckten Länge des Brückenträgers (8) positioniert sind und diesem befestigt sind.

11. Ortsveränderliche Brücke nach Anspruch 1,
**gekennzeichnet durch** eine mehrteilige Ausführung, die mit wenigstens zwei Brückensegmenten (131, 132) realisiert ist, wobei ein Brückensegment (131, 132) dem integrierten Brückenbau entspricht, der mit den Brückenstegen (5) und mit letzteren mechanisch verbundenen Brückenträgern (8) realisiert ist.

12. Ortsveränderliche Brücke nach Anspruch 11,
**dadurch gekennzeichnet, daß** das einzelne Brückensegment (131, 132) mit wenigstens einem Brückenstegpaar (71, 72) und mit an den beiden Brückenstegen (5) des Brückenstegpaares (71, 72) mechanisch befestigten Brückenträgern (5) realisiert ist, wobei die Befestigung der Brückenträger (8) vorzugsweise an den Endabschnitten und - in Abhängigkeit des Durchhanges der Brückenstege (5) - zueinander beabstandet am durch die Endabschnitte eingegrenzten zwischenbefindlichen Längenabschnitt der Brückenstege (5) vorgesehen ist.

13. Ortsveränderliche Brücke nach Anspruch 11,
**dadurch gekennzeichnet, daß** immer zwei einzelne Brückensegmente (131, 132) am Ende der Brückenstege (5) mechanisch gekoppelt sind, wobei die sich gegenüberstehenden Brückenstegenden durch eine Koppeleinheit (14) gesichert sind.

14. Ortsveränderliche Brücke nach Anspruch 13,
**dadurch gekennzeichnet, daß** die Koppeleinheit (14) neben einem Betätigungsmechanismus mit aus einem männlichen und / oder weiblichen Koppelelement zusammengesetzt ist, das dem betreffenden Brückensteg (5) endseitig installiert ist und die der Betätigungsmechanismus bedient, mit deren Vereinigung sich der gesicherte befestigte Zustand von horizontal am Flugzeugrumpf (4) entlanggeführten und aneinandergereihten Brückenstegen (5) umsetzen läßt.

15. Ortsveränderliche Brücke nach den Ansprüchen 13 oder 14,
**dadurch gekennzeichnet, daß** der Betätigungsmechanismus der Koppeleinheit (14) aufgrund der ihm zugeführten mechanischen oder hydraulischen oder elektrischen Energie die beweglich ausgeführten Koppelelemente betätigt, die im Endzustand miteinander mechanisch gekoppelt sind.

16. Ortsveränderliche Brücke nach Anspruch 1,
**dadurch gekennzeichnet, daß** die Brückenstege (5) als ungehindert begehbare Lauf- und Transportstege ausgebildet sind, denen ein Geländer (15), das an einer Längskante (16) des Brückensteges (5), die dem Flugzeugrumpf (4) nicht zugewandt ist, befestigt ist.

17. Ortsveränderliche Brücke nach Anspruch 1,
**dadurch gekennzeichnet, daß** die dem Brückenbau integrierten Brückenstege (5) derart positioniert sind, daß die sich dem Flugzeugrumpf (4) zuwendende Längskante (17) des einzelnen Brückensteges (5) mit dem Niveau einer einzelnen Türschwelle von mehreren in Richtung der Rumpflängsachse (6) und in horizontaler Ebene befindlichen Flugzeugtüren (18) abschließt, wonach die Oberkante des einzelnen Brückensteges (5) definitiv mit der Oberkante der Türschwelle im Eintrittsbereich der betreffenden Flugzeugtür (18) nahezu bündig abschließt.

18. Ortsveränderliche Brücke nach Anspruch 1,
**dadurch gekennzeichnet, daß** dem Brückenbau zwei Brückenstegpaare (71, 72) integriert sind, von denen die Brückenstege (5) des einzelnen Brückenstegpaares (71, 72) zueinander in Richtung der Rumpfhochachse (9) etagenweise am Flugzeugrumpf (4) angeordnet sind, wobei die einzelne Etage (191, 192) auf das Niveau von mehreren in Richtung der Rumpflängsachse (6) und in horizontaler Ebene befindlichen Flugzeugtüren (18) abgestimmt ist.

19. Ortsveränderliche Brücke nach Anspruch 18,
**dadurch gekennzeichnet, daß** der Brückenbau aus wenigstens zwei Brückesegmenten (131, 132) mit jeweils zwei Brückenstegpaare (71, 72) integriert ist, und daß die Länge der Brückenstege (5) des einzelnen Brückenstegpaares (71, 72) mit etwa der Hälfte der Brückenspannweite bestimmt ist.

20. Ortsveränderliche Brücke nach Anspruch 19,
**dadurch gekennzeichnet, daß** die Länge der Brückenstege (5) des einzelnen Brückenstegpaares (71, 72) derart bestimmt ist, wonach zumindestens für einen Türbereich (2) einer unteren und / oder oberen Etage (191, 192) der unbehinderte Zugang realisiert ist.

21. Ortsveränderliche Brücke nach Anspruch 1,
**dadurch gekennzeichnet, daß** die mechanische Befestigung aller Brückenträger (8) am betreffenden Brückensteg (5) im T- und / oder Kreuzstoß realisiert ist.

22. Ortsveränderliche Brücke nach Anspruch 1,
**dadurch gekennzeichnet, daß** die mechanische Befestigung aller Brückenträger (8) am betreffenden Brückensteg (5) durch Verschraubung und / oder Vernietung und / öder Verschweißung umgesetzt ist.

23. Ortsveränderliche Brücke nach den Ansprüchen 1 und 9,
**dadurch gekennzeichnet, daß** der Brückenbau mit der am Tragelement (12) gekoppelten Zug- und oder Abhängevorrichtung auf dem Flugzeugrumpf (4) ablegbar ist.

24. Ortsveränderliche Brücke nach Anspruch 23,
**dadurch gekennzeichnet, daß** der Brückenbau mit der am Tragelement (12) gekoppelten Zug- und oder Abhängevorrichtung bis nahe auf dem Flugzeugrumpf (4) absenkbar ist und die Brückenstege (5) des bodennahe befindlichen Brückenstegpaares (71) zusätzlich mit mehreren auf dem Boden (20) ortsfest positionierten Bodenstützen abgestützt sind.

25. Ortsveränderliche Brücke nach Anspruch 24,
**dadurch gekennzeichnet, daß** die Bodenstützen den Brückenstegen (5) eingelassen sind und bei ihrem Nichteinsatz in die Brückenstege (5) einziehbar sind.

26. Ortsveränderliche Brücke nach den Ansprüchen 1, 8 und 9,
**dadurch gekennzeichnet, daß** der Brückenbau mit der am Tragelement (12) gekoppelten Zug- und oder Abhängevorrichtung bis nahe auf dem Flugzeugrumpf (4) absenkbar ist und die anstelle der Polsterelemente (111) installierten Abstandhalter, die gegen die Polsterelemente (111) ausgetauscht sind, gegen den Rumpfquerschnitts-Außenbereich abgestützt sind, wobei eine zusätzliche Justiereinrichtung die stationäre Position des Brückenbaus am Flugzeugrumpf (4) dermaßen verändert, bis daß der Brückenbau vermittels der Abstandhalter positionsgewünscht am Flugzeugrumpf (4) fixiert ist.

## Claims

1. Movable bridge (1) for unobstructed external access to the door regions and adjoining external fuselage regions (2, 3) of a stationed aircraft, which bridge is intended for external or internal working operations on or in the aircraft fuselage (4) and for the entry or egress of persons or the loading or unloading of goods into or out of the aircraft fuselage, wherein a number of footbridges (5), which are disposed in a manner extending horizontally and parallel to one another on either side of the aircraft fuselage (4), extend in the direction of the longitudinal axis (6) of the fuselage, two of which footbridges (5) at a time, which extend in a parallel manner, form a pair (71, 72) of footbridges,
**characterised in that** a number of curved footbridge girders (8), which are disposed transversely to the longitudinal axis (6) of the fuselage and in a manner spaced apart from one another in the direction of the said longitudinal axis (6) and whose curvature is adapted to the external shape of the fuselage cross-section, are fastened by their girder profile in each case to the footbridges (5) of a pair (71, 72) of footbridges - in a manner distributed over the length of the bridge - and are integrated into the bridge structure.

2. Movable bridge according to claim 1,
**characterised in that** the curvature of the bridge girders (8) is adapted, in dependence upon their intended deposition or support on or at the external fuselage regions (3) in question which takes place at least on one of the upper external regions of the fuselage cross-section of the aircraft fuselage (4) and in a manner correlated with the change in the external camber of the fuselage in the direction of the longitudinal and vertical axes (6, 9) of the latter and with the distance (s) of the bridge girders (8) from one another, to the approximately circular or oval external shape of the fuselage cross-section of the aircraft fuselage (4).

3. Movable bridge according to claim 1,
**characterised in that** there are integrated into the bridge structure at least two pairs (71, 72) of footbridges which are formed from footbridges (5) which are uniformly spaced apart from one another on the left and right sides of the aircraft fuselage (4) and vertically in the direction of the vertical axis (9) of the fuselage and are guided horizontally along the said aircraft fuselage (4).

4. Movable bridge according to claim 3,
**characterised in that** the two footbridges (5) of the lower pair (71) of footbridges are interrupted in the region of the wing suspension on the aircraft fuselage (4) or are adapted to the shape of the wing cross-section in this region.

5. Movable bridge according to claim 1,
**characterised in that** the girder profile of the bridge girders (8) is mechanically fastened to the footbridges (5) in question in certain sections and/or at the ends of the girders, the fastening of the bridge girders (8) to the footbridges (5) being coordinated with the defined disposition thereof on the aircraft fuselage (4).

6. Movable bridge according to claim 1,
**characterised in that** the end sections of the footbridges (5) of the pair (71, 72) of footbridges in question are fixedly connected in a mechanical manner to at least two bridge girders (8).

7. Movable bridge according to claim 1,
**characterised in that** at least one end of the footbridges (5) is fastened in a stationary manner to a supporting structure which is positioned in a manner integral with the floor and is spatially self-supporting.

8. Movable bridge according to claim 1,
**characterised in that** there are placed underneath the curved bridge girders (8) a number of padding elements (111) which are disposed in a manner distributed on the internal periphery and which, because of the inherent weight of the bridge structure, support the latter against the external region of the fuselage cross-section.

9. Movable bridge according to claim 1,
**characterised in that** there is fastened to the curved bridge girders (8), on the external periphery, at least one supporting element (12) which is suitable for coupling to a pulling and disconnecting device which is positioned in a manner integral with the ceiling and is self-supporting in a movable manner, and which supporting element is positioned in the centre of the stretched length of a bridge girder (8).

10. Movable bridge according to claim 9,
**characterised in that** a number of supporting elements (12) are fastened, so as to be distributed in a spaced-apart manner, to the external periphery of each curved bridge girder (8), which supporting elements are positioned in the central region of the stretched length of the bridge girder (8) and are fastened to the latter.

11. Movable bridge according to claim 1,
**characterised by** a multipart design which is produced with the aid of at least two bridge segments (131, 132), one bridge segment (131, 132) corresponding to the integrated bridge structure which is brought about with the aid of footbridges (5) and of bridge girders (8) which are mechanically connected to the latter.

12. Movable bridge according to claim 11,
**characterised in that** the individual bridge segment (131, 132) is produced with the aid of at least one pair (71, 72) of footbridges and of bridge girders (8) which are mechanically fastened to the two footbridges (5) of the pair (71, 72) of footbridges, provision being made for the fastening of the bridge girders (8) preferably to the end sections and - in dependence upon the sag of the footbridges (5) - in a manner spaced apart from one another, to that section of the length of the footbridges (5) which is bounded by the said end sections and located in between.

13. Movable bridge according to claim 11,
**characterised in that** two individual bridge segments (131, 132) at a time are mechanically coupled to the end of the footbridges (5), the mutually opposed ends of the said footbridges being secured by a coupling unit (14).

14. Movable bridge according to claim 13,
**characterised in that** the coupling unit (14) is assembled, in addition to an actuating mechanism, from a male and/or female coupling element which is installed at the end of the footbridge (5) in question, and the said coupling unit is operated by the actuating mechanism, with the aid of the combination of which the secured, fastened condition of footbridges (5) which are guided horizontally along the aircraft fuselage (4) and arranged in a row can be changed over.

15. Movable bridge according to claim 13 or 14,
**characterised in that** the actuating mechanism of the coupling unit (14) actuates, because of the mechanical or hydraulic or electrical energy fed to it, the coupling elements which are of movable design and which, in the final condition, are mechanically coupled to one another.

16. Movable bridge according to claim 1,
**characterised in that** the footbridges (5) are constructed as catwalks and transport passages which can be walked on in an unobstructed manner and to which a handrail (15) is fastened on a longitudinal edge (16) of the footbridge (5) which does not face towards the aircraft fuselage (4).

17. Movable bridge according to claim 1,
**characterised in that** the footbridges (5) integrated into the bridge structure are positioned in such a way that that longitudinal edge (17) of the individual footbridge (5) which faces towards the aircraft fuselage (4) terminates at the level of an individual door sill of a number of aircraft doors (18) located in the direction of the longitudinal axis (6) of the fuselage and in the horizontal plane, and that the upper edge of the individual footbridge (5) definitely terminates almost flush with the upper edge of the door sill in the entrance region of the aircraft door (18) in question.

18. Movable bridge according to claim 1,
**characterised in that** there are integrated into the bridge structure two pairs (71, 72) of footbridges, of which the footbridges (5) of the individual pair (71, 72) of footbridges are disposed on the aircraft fuselage (4) tier-wise in relation to one another in the direction of the vertical axis (9) of the fuselage, the individual tier (191, 192) being coordinated with the level of a number of aircraft doors (18) located in the direction of the longitudinal axis (6) of the fuselage and in the horizontal plane.

19. Movable bridge according to claim 18,
**characterised in that** the bridge structure is integrated from at least two bridge segments (131, 132) each having two pairs (71, 72) of footbridges, and that the length of the footbridges (5) of the individual pair (71, 72) of footbridges is fixed at about half the span of the bridge.

20. Movable bridge according to claim 19, **characterised in that** the length of the footbridges (5) of the individual pair (71, 72) of footbridges is fixed in such a way that unobstructed access is brought about, at least for one door region (2) of a lower and/or upper tier (191, 192).

21. Movable bridge according to claim 1, **characterised in that** the mechanical fastening of all the bridge girders (8) to the footbridge (5) in question is brought about at the T-joint and/or cross-joint.

22. Movable bridge according to claim 1,
**characterised in that** the mechanical fastening of all the bridge girders (8) to the footbridge (5) in question is changed over by screwing and/or riveting and/or welding.

23. Movable bridge according to claims 1 and 9,
**characterised in that** the bridge structure can be deposited on the aircraft fuselage (4) with the aid of the pulling and/or disconnecting device coupled to the supporting element (12).

24. Movable bridge according to claim 23,
**characterised in that** the bridge structure can be lowered, with the aid of the pulling and/or disconnecting device coupled to the supporting element (12), until it is almost on the aircraft fuselage (4), and the footbridges (5) of the pair (71) of footbridges which is located near the floor are additionally supported with the aid of a number of floor supports positioned in a stationary manner on the floor (20).

25. Movable bridge according to claim 24, **characterised in that** the floor supports are let into the footbridges (5) and can be retracted into the footbridges (5) when they are not being used.

26. Movable bridge according to claims 1, 8 and 9,
**characterised in that** the bridge structure can be lowered, with the aid of the pulling and/or disconnecting device coupled to the supporting element (12), until it is almost on the aircraft fuselage (4), and the spacers which are installed instead of the padding elements (111) and are substituted for the padding elements (111) are supported against the external region of the fuselage cross-section, an additional adjusting apparatus varying the stationary position of the bridge structure on the aircraft fuselage (4) until the said bridge structure is fixed in the desired position on the aircraft fuselage (4) by means of the said spacers.

## Revendications

1. Pont mobile (1) pour un accès extérieur sans obstacles aux zones de portes et aux zones extérieures de fuselage attenantes (2,3) d'un avion en stationnement, ledit pont étant destiné à des travaux extérieurs ou intérieurs sur ou dans le fuselage de l'avion (4), à l'entrée ou la sortie de personnes, ou au chargement ou déchargement de marchandises dans ou hors du fuselage de l'avion, plusieurs entretoises de pont (5) disposées horizontalement et parallèlement les unes aux autres sur les deux côtés du fuselage d'avion (4) s'étendant dans le sens de l'axe longitudinal du fuselage (6), deux de ces entretoises parallèles (5) formant une paire d'entretoises de pont (71, 72), et **caractérisé en ce que** plusieurs supports de ponts (8) incurvés distants les uns des autres dans le sens de l'axe longitudinal du fuselage (6) et dont la courbure est adaptée à la forme extérieure de la section transversale du fuselage ont été fixés avec un profil porteur contre les entretoises de pont d'une paire d'entretoises de pont (71, 72) - sur toute la longueur du pont - et ont été intégrées à la structure du pont.

2. Pont mobile selon la revendication 1, **caractérisé en ce que** la courbure des supports de ponts (8) dépend du dépôt ou du support prévu pour ces supports sur ou contre les zones externes de fuselage (3), ledit dépôt ou support étant effectué au moins sur un des segments externes supérieures à section transversale du fuselage d'avion (4), étant relié à la modification de la courbure externe en direction de l'axe longitudinal et vertical du fuselage (6,9) et à la distance entre les supports de pont (8), et étant adapté par approximations à la forme circulaire ou ovale à section transversale du fuselage d'avion (4).

3. Pont mobile selon la revendication 1, **caractérisé en ce que** au moins deux paires d'entretoises de pont (71, 72) ont été intégrées à la structure de pont, les dites paires étant constituées d'entretoises de pont (5) présentant un écartement homogène à partir de la gauche et de la droite du fuselage et verticalement dans la direction de l'axe vertical du fuselage (9) et guidées horizontalement le long du fuselage de l'avion (4).

4. Pont mobile selon la revendication 3, **caractérisé en ce que** les deux entretoises de pont (5) de la paire d'entretoises de pont inférieure (71) sont interrompues dans la zone de la suspension d'aile, contre le fuselage d'avion (4), ou sont adaptées, dans cette zone, à la forme de section transversale de l'aile.

5. Pont mobile selon la revendication 1, **caractérisé en ce que** le profil porteur du support de pont (8) est fixé mécaniquement aux entretoises de pont concernées (5), par sections et / ou du côté de l'extrémité de support, la fixation des supports de pont (8) aux entretoises de pont (5) étant adaptée à la disposition définie de ces entretoises contre le fuselage de l'avion (4).

6. Pont mobile selon la revendication 1, **caractérisé en ce que** les segments d'extrémité des entretoises de pont (5) de la paire d'entretoises de pont concernée (71, 72) sont reliés fermement et mécaniquement à aux moins deux supports de pont (8).

7. Pont mobile selon la revendication 1, **caractérisé en ce qu'**au moins une extrémité des entretoises de pont (5) est fixée de manière stationnaire à une structure porteuse ancrée dans le sol et indépendante au niveau de l'espace.

8. Pont mobile selon la revendication 1, **caractérisé en ce que** plusieurs éléments à capitonnage (111) répartis sur la circonférence interne ont été disposés sous les supports de pont incurvés (8), les dits éléments soutenant les supports de pont contre le segment extérieur à section transversale du fuselage, à cause du poids propre de la structure de pont.

9. Pont mobile selon la revendication 1, **caractérisé en ce que** au moins un élément porteur (12) a été fixé pour les supports de pont incurvés (8) sur la circonférence externe, l'élément convenant pour un couplage avec un dispositif de traction et de suspension fixé au plafond et indépendant au niveau de l'espace, et étant positionné au centre de la longueur étendue d'un support de pont (8).

10. Pont mobile selon la revendication 9, **caractérisé en ce que** plusieurs éléments porteurs (12) sont répartis avec un certain écartement sur la circonférence externe de chaque support de pont incurvé (8), les dits éléments étant positionnés dans le segment central de la longueur étendue du support de pont (8) et fixés audit support.

11. Pont mobile selon la revendication 1, **caractérisé par** une exécution en plusieurs parties réalisée avec au moins deux segments de pont (131, 132), un segment de pont (131, 132) correspondant à la structure de pont intégrée obtenue avec les entretoises de pont (5) et avec des supports de pont (8) reliés mécaniquement aux entretoises (5).

12. Pont mobile selon la revendication 11, **caractérisé en ce que** chaque segment de pont (131, 132) a été réalisé avec au moins une paire d'entretoises de pont (71, 72) et des supports de pont (5) fixés mécaniquement aux deux entretoises de pont (5) de la paire d'entretoises de pont (71, 72), la fixation des supports de pont (8) étant prévue de préférence contre les segments d'extrémité et - en fonction de la flexion des entretoises - contre le segment longitudinal intermédiaire des entretoises de pont (5) délimité par les segments d'extrêmité.

13. Pont mobile selon la revendication 11, **caractérisé en ce que** deux segments de pont différents (131, 132) sont reliés toujours reliés mécaniquement à l'extrémité des entretoises de pont (5), les extrémités d'entretoises de pont opposées étant assurées par une unité de couplage (14).

14. Pont mobile selon la revendication 13, **caractérisé en ce que** l'unité de couplage (14) est composée non seulement d'un mécanisme d'activation mais aussi d'un élément de couplage mâle et/ou femelle installé à l'extrémité de l'entretoise de pont concernée (5) et servant le mécanisme d'activation, la combinaison du mécanisme d'activation et de l'élément de couplage permettant de commuter des entretoises de pont (5) juxtaposées et guidées horizontalement le long du fuselage d'avion (4) en position fixe et assurée.

15. Pont mobile selon la revendication 13 ou 14, **caractérisé en ce que** le mécanisme d'activation de l'unité de couplage (14) active, sur base de l'énergie mécanique, hydraulique ou électrique acheminée vers ledit mécanisme, les éléments de couplage mobiles reliés mécaniquement les uns aux autres en position finale.

16. Pont mobile selon la revendication 1, **caractérisé en ce que** les entretoises de pont (5) se présentent sous la forme de passerelles et entretoises de transport pouvant être pratiquées sans problèmes et auxquelles est relié un garde-corps (15) fixé à un des bords longitudinaux (16) de l'entretoise de pont (5) non orientée vers le fuselage d'avion (4).

17. Pont mobile selon la revendication 1, **caractérisé en ce que** les entretoises de pont (5) intégrées à la structure de pont ont été positionnées de telle sorte que le bord longitudinal de chaque entretoise de pont (5) orienté vers le fuselage d'avion (4) se termine au niveau d'un seuil de plusieurs portes d'avion (18) situées dans un plan horizontal, dans la direction de l'axe longitudinal du fuselage (6), le bord supérieur de chaque entretoise de pont (5) se terminant ensuite de manière définitive presque ) ras du bord supérieur du seuil, dans le segment d'entrée de la porte d'avion (18) concernée.

18. Pont mobile selon la revendication 1, **caractérisé en ce que** deux paires d'entretoises de pont (71, 72) ont été intégrées à la structure de pont, les entretoises de pont (5) de chaque paire d'entretoises (71, 72) étant reliées les unes aux autres contre le fuselage d'avion (4), en étages et dans la direction de l'axe vertical du fuselage (9), chaque étage étant adapté au niveau de plusieurs portes d'avion situées dans un plan horizontal, dans la direction de l'axe longitudinal du fuselage (6).

19. Pont mobile selon la revendication 18, **caractérisé en ce que** la structure de pont composée d'au moins deux segments de pont (131, 132) a été intégrée à deux paires d'entretoises de pont (71, 72), et **en ce que** la longueur des entretoises de pont (5) de chaque paire d'entretoises de pont (71, 72) a été fixée à la moitié environ de la travée du pont.

20. Pont mobile selon la revendication 19, **caractérisé en ce que** la longueur des entretoises de pont (5) de chaque paire d'entretoises (71, 72) a été fixée de manière à permettre un accès idéal au moins pour un segment de porte (2) d'un étage inférieur et/ou supérieur (191, 192).

21. Pont mobile selon la revendication 1, **caractérisé en ce que** tous les supports de pont (8) ont été fixés mécaniquement à l'entretois de pont correspondante (5), dans un assemblage en T ou en croix.

22. Pont mobile selon la revendication 1, **caractérisé en ce que** tous les supports de pont (8) ont été fixés mécaniquement à l'entretoise de pont correspondante (5) par vissage et/ou rivetage et/ou soudage.

23. Pont mobile selon les revendications 1 et 9, **caractérisé en ce que** la structure de pont avec le dispositif de traction et / ou de suspension relié à l'élément porteur (12) peut être déposée sur le fuselage de l'avion (4).

24. Pont mobile selon la revendication 23, **caractérisé en ce que** la structure de pont avec le dispositif de traction et / ou de suspension relié à l'élément porteur (12) peut être abaissée presque jusque sur le fuselage de l'avion (4) et **en ce que** les entretoises de pont (5) de la paire d'entretoises de pont (71) située près du sol peut être supportées en sus par plusieurs piliers de sol fixés au sol (20) de manière stationnaire.

25. Pont mobile selon la revendication 24, **caractérisé en ce que** les piliers de sol ont été encastrés dans les entretoises de pont (5) et peuvent être escamotés dans les dites entretoises (5) en cas de non-utilisation.

26. Pont mobile selon les revendications 1, 8 et 9, **caractérisé en ce que** la structure de pont avec le dispositif de traction et / ou de suspension relié à l'élément porteur (12) peut être abaissée jusque presque sur le fuselage de l'avion (4) et **en ce que** les écarteurs installés en lieu et place des éléments à capitonnages (111) ont été soutenus contre le segment externe à section transversale du fuselage, un dispositif d'ajustement supplémentaire modifiant la position stationnaire de la structure de pont contre le fuselage d'avion (4) jusqu'à ce que la structure ait été fixée dans la position désirée contre le fuselage d'avion (4) par l'intermédiaire des écarteurs.
